# EUROPEAN PATENT SPECIFICATION

(11) **EP 3 032 664 B1**
(45) Date of publication and mention of the grant of the patent: **07.08.2019**
(21) Application number: 14004130.2
(22) Date of filing: 08.12.2014
(51) Int. Cl.: H02B 1/30

(54) **Label holder for a distribution box, cover with a label holder and distribution box**
Etikettenhalter für einen Verteilerkasten, Deckel mit einem Etikettenhalter und Verteilerkasten
Porte-étiquette pour une boîte de distribution, un capot avec un support d'étiquette et une boîte de distribution

(43) Date of publication of application: 15.06.2016
(73) Proprietor: ABB AG, 68309 Mannheim (DE)
(72) Inventor: Witte, Adriaan Marinus, 3436 HT Nieuwegein (NL); Goor, Gerrit Klaas, 3772NN Barneveld (NL)

(56) References cited:
- EP-A1- 2 312 696
- AU-A1- 2009 200 800

## Description

The present invention is about a label holder for a distribution box, a cover with a label holder, and a distribution box.

A distribution box is sometimes also called junction box, and in smaller versions it is also called consumer unit. Such a distribution box typically has a base and a cover. Switching devices, for example switch gears, circuit breakers, or the like, are mounted on the base. The cover of the junction box or distribution box has an elongated opening in a front wall, which gives access to switching operating elements of the switching devices, such as manually operable switching handles. Usually each switching device is assigned to a certain circuit, for example a room or a subset of sockets or devices in a room. For knowing which switching device is assigned to which circuit, the cover is provided with stick-on label holders in order to label the switch gears. Said label holders are not easy to remove and therefore cannot be changed easily when needed.

In EP 2 151 901 A2 a distribution box which has a cover with a mountable label holder is disclosed, wherein said label holder has a furrow, which can be used to clip the label holder into a U-shaped furrow in the cover of the distribution box. Herein it is difficult to remove the label holder and/or to change labels. Once the label holder is placed, special tools are needed to demount it; without those tools, the label holder can easily be destroyed during removal. Documents EP 2 312 696 A1 and AU2009200800 A1 further disclose label holders with pivoting label holder profiles.

In the light of the state of the art, it is the objective of the present invention to provide a label holder for a distribution box, which is easy to mount and/or to dismount.

To achieve the objective, a label holder with the features according to claim 1 is provided.

It is a further objective of the present invention to provide a cover for a distribution box, which can be cost-efficiently labelled. This further objective, is achieved by a cover with the features according to claim 9.

Also, it is a further objective of the present invention to provide a distribution box, wherein label holders can easily be mounted or dismounted. This further objective is achieved by a distribution box with the features according to claim 13.

Advantageous modifications and further embodiments of the invention are subject matter of the dependent claims. Aspects and parts of aspects are independent of each other and can be combined in any manner.

According to the invention, a label holder has a rectangular shaped label holding profile, wherein said label holder comprises at least two lengthwise extending holder supports, wherein the holding profile is formed as a hinged cover which is removably mounted between said at least two holder supports, whereby a swivel axis of the holding profile is extending parallel to a long side of said holding profile wherein each holder support has at least a first mounting section designed for mounting the label holder into a distribution box and at least a second mounting section designed for mounting the holding profile to said holder support, wherein the first mounting section has first fixing means which are designed to cooperate with corresponding second fixing means in the distribution box, wherein said first fixing means is a fin protruding from the holder support, opposite to a narrow side of the holding profile, wherein said fin is designed to engage with the corresponding second fixing means in the distribution box.

Advantageously, the holding profile can be swivelled regarding said a swivel axis in order to insert or change labels. To ensure an easy access to the labels, the holding profile can be mounted hinged upwards or downwards regarding said swivel axis. The indication of upwards and downwards refers to the position of the distribution box and the cover when mounted according to its designated use. As the holder supports extend from the holding profile, the label holder can be mounted easily into a cover and give access to the switch gears to be labelled.

According to an advantageous embodiment of the invention, the holding profile is removably mounted between the at least two holder supports with its narrow sides oriented in parallel to a direction of lengthwise extension of each of the at least two holder supports.

According to another advantageous aspect of the invention, each fin has a long hole which is designed to engage with the corresponding second fixing means in the distribution box.

According to another advantageous aspect of the invention, said holding profile has at least one indentation located at one of its long sides opposite to said swivel axis.

According to another advantageous aspect of the invention, said holding profile is formed as a transparent cover which has at least one insertion for removably holding a label behind the transparent cover, wherein said insertion is arranged alongside at least one of the long sides of the holding profile.

A cover for a distribution box according to the invention has at least one rectangular opening for giving access to the front side of switch gears mounted to the distribution box, with at least one label holder, wherein said label holder is a label holder as described above.

According to an advantageous aspect of the invention, the first mounting sections of said holder supports are mounted into corresponding holding sections at the narrow sides of the rectangular opening in the cover.

According to another advantageous aspect of the invention, said second fixing means are formed at said holding sections.

According to another advantageous aspect of the invention said second fixing means comprise at least one elongated bar extending into the rectangular opening and designed to engage with the long hole in the fin of the first mounting section.

A distribution box according to the invention has a cover as described above.

Therewith, the holding profile can be held in a secure way.

The label holder according to the invention has the advantage that it fits on the current wall mounted consumer units and can bemounted on top of the row of switch gears as well as at the bottom, depending on the space available.

By pivoting the holding profile, the label is easily replacable for the installer.

A further big advantage is that the holder supports are mounted without tools in the sides of the opening in the cover for the switch gears, by clicking, and the holding profile is mounted between the holder supports by bending and then pushing the axes in the lower holes of the supports. After this mounting the label holder can be clicked open by pulling with one finger in the middle at the top. No tools are needed to assemble the label holder and still it is held in a secure way at the cover, and it can easily be swiveled for easy replacement of the label.

The holding profile can be mounted in a removable way with its narrow side between the holding supports. The holding profile can then be swivelled about its long side and is easier to use. In order to mount the holding profile to the holder supports or vice versa, both the holding profile and the holding supports comprise corresponding swivel-joints, which co-operate. Said swivel-joints define a swivel-axis, around which said holding profile can be pivoted. In a preferred embodiment the second mounting section of said holder supports can comprise latching elements for holding the holding profile between the holder supports, wherein said holding profile has one fixing element on each narrow side. Each second mounting section comprises complementary fixing brackets. The fixing elements and fixing brackets can preferably be designed to ensure a secure holding of the profile and in this function can form the swivel axis.

Also, said holding profile can provide detachable latching elements, which can co-operate with corresponding latching elements provided at the second mounting section. The holding profile can in this way be easily detached and swivelled.

Further, said first mounting section can have a fin protruding from the holder support, away from the front side of the holding profile. Said fin is designed to engage with an elongated bar protruding from a holding section in the cover of the distribution box. The fin can show one or more snap tabs, for giving the fin a firmer grip on said undercut.

Alternatively, the holding section of the cover can also show recesses, in which said fin can be accommodated. In yet another embodiment of the invention the first mounting section has a long hole arranged in said fin, wherein said elongated bar can engage at least partially into said long hole.

To pivot the holding profile in an easy way, said holding profile can have one or more indentations located at one of its long sides opposite to said swivel axis. To swivel said holding profile only one finger is needed by pulling down said holding profile at said indentation.

Further, the holding profile can have one or more insertion(s) or guidance elements for holding a label. These insertions can be formed as guide rails or simple protrusions. Preferred an insertion can be arranged alongside one or both long sides of the holding profile. Labels made out of paper or plastic or even thin metal shields can be easily slided-in or inserted by bending the label and are effectively protected against moisture and other harmful conditions. In order to ensure readability of the labels, the label holding profile can be made out of a transparent material, such as acrylic glass, any transparent plastic material or glass.

According to an aspect of the invention, a casing for a distribution box comprises one or more label holder(s) as described above.

Herein, the first mounting sections of said holder supports can be mounted into corresponding holding sections of the cover. These holding sections are defined in one or more openings located correspondingly to a location of switches to be labelled.

In order to firmly hold the label holder in the holding sections of the opening, said holding sections comprise one or more elongated bars in which said fin of the first mounting section is accommodated.

In another embodiment, the holding sections can comprise one or more recesses shaped like grooves, in which each fin can be received.

The first mounting section of the holder supports and the holding sections of the cover generally speaking work together as a snap-action connection.

Herewith, the label holder can be mounted or dismounted without any extra tool.

The label holder can advantageously be mounted in different orientations and can be aligned to the arrangement of switch gears set in the casing, so that the holding profile is either on a top or bottom section of said opening. Other arrangements, such as to set said holding profile in a left and/or right section or even using the holding profile of the label holder as a coverage, are possible.

In yet another aspect of the invention a distribution box has one cover as described above.

Said cover is easy to label and gains a valuable look because of the elegant construction and design of the label holder.

The label holder according to the invention can be mounted into the cover of the distribution box without any tools or separate instruments. The holder supports are mounted into the holding section by clicking-in the first mounting section of each holder support into the corresponding holding section of the opening of the casing. The holding profile is then mounted in the first mounting section of each holder support to the corresponding swivel-joints of the holding profile by bending said holding profile and simply clicking-in the same.

Alternatively, first the holding profile can be mounted between the holder supports and the complete label holder can be fixed into the holding sections of the casing.

A distribution box according to the invention envelops a casing as described before and a base plate on which all electronic components are attached. The casing can be attached onto the base plate in order to safeguard the electronic components and is detachably fixed to the base plate. In either way, the distribution box according to the invention can be labelled in an easy and cost-efficient way. Labels can also be changed fast and simple.

Further embodiments as well as some of the advantages according to these and other embodiments will be described in the following with reference to the figures. The figures resemble only schematic illustrations of an embodiment of the invention.

Wherein
- **Fig. 1**: shows a perspective view of a label holder according to the invention,
- **Fig. 2**: shows an exploded view of said label holder,
- **Fig. 3**: shows a pivoted holding profile of said label holder,
- **Fig. 4**: shows a perspective view of a distribution box according to the invention, and
- **Fig. 5**: a detailed view of a holding section of said distribution box.

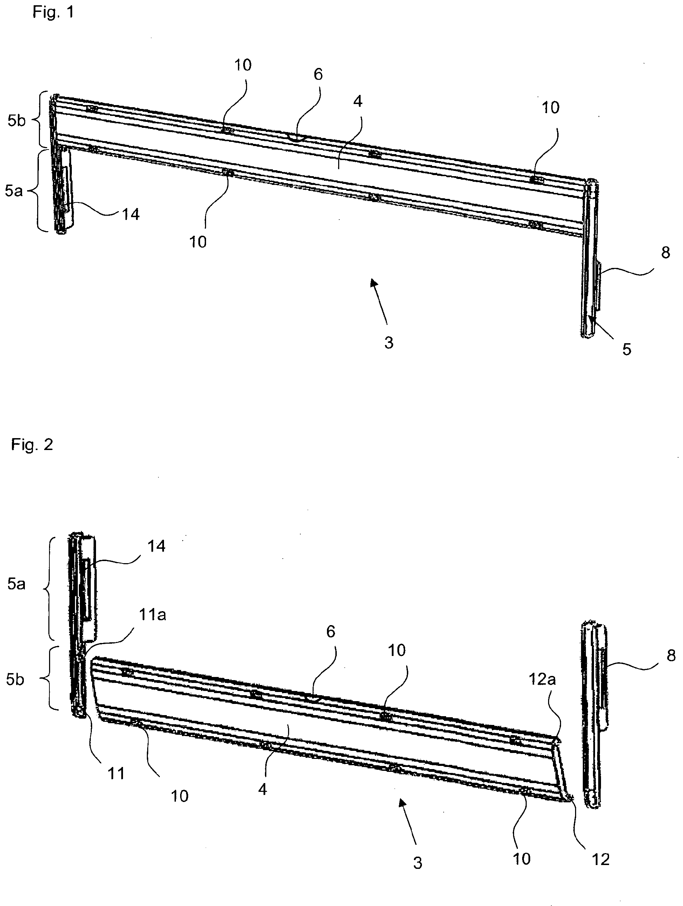

In **Fig. 1** to **3** a label holder 3 comprises a rectangular shaped, elongated holding profile 4 and two holder supports 5.

The holding profile 4 is removably mounted between the two holder supports 5. Both holder supports 5 are located each at a narrow side of said holding profile 4 and extend perpendicular regarding a long side of said holding profile 4.

Each holder support 5 features a first mounting section 5a and a second mounting section 5b.

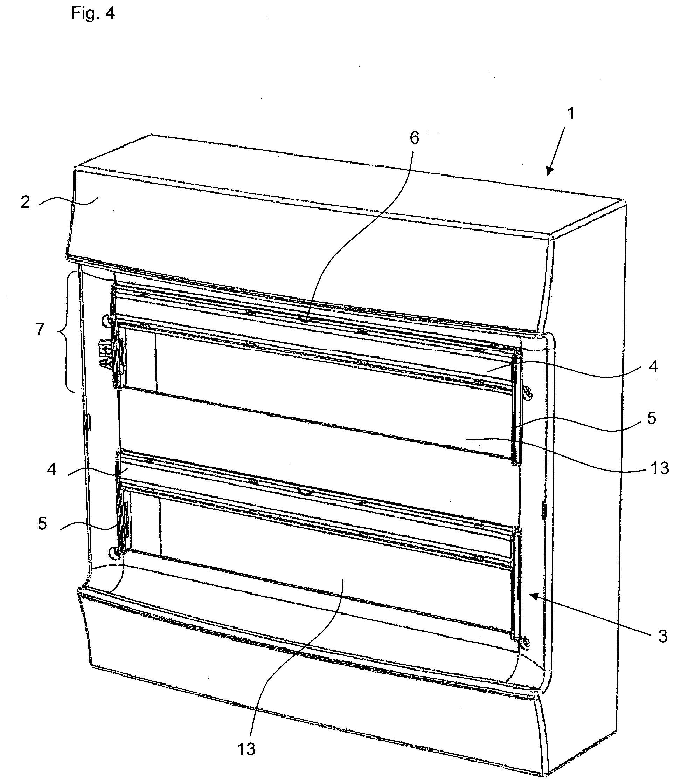

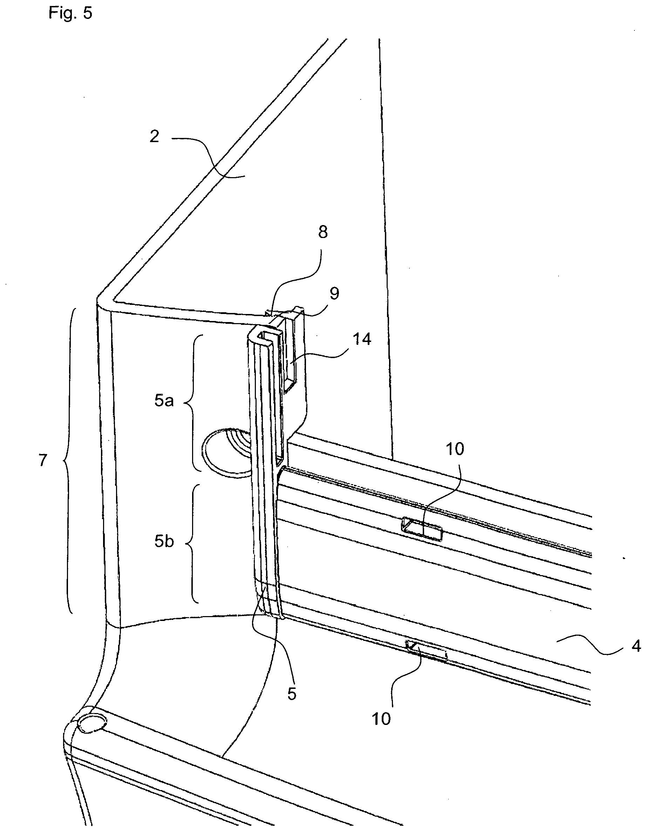

The first mounting section 5a is designed for mounting said label holder 3 into a cover 2 of a distribution box 1, see **Fig. 4****,** and therefore comprises an elongated connection part formed as a fin 8. Said fin 8 advances in an angle, here about perpendicular, to the first mounting section 5a. It is designed in such a way that it, in co-working with the first mounting section 5a, can catch a corresponding part in the distribution box 1 (see **Fig. 5**).

Further the first mounting section 5a has a long hole 14 arranged in the fin 8.

Further, said holder support 5 possesses swivel-joint bearings 11 which can hold corresponding swivel-joint bars 12 (**Fig. 2**). These are designed in such a way that the holding profile 4 can be held firmly, but still removable from inside the grip of the holder supports 5.

Via said swivel-joint parts 11, 12 the holding profile 4 can be clipped into the second mounting section 5b of both holder supports 5. The swivel-joint bars 12 join into said swivel-joint bearings by a light positive fit.

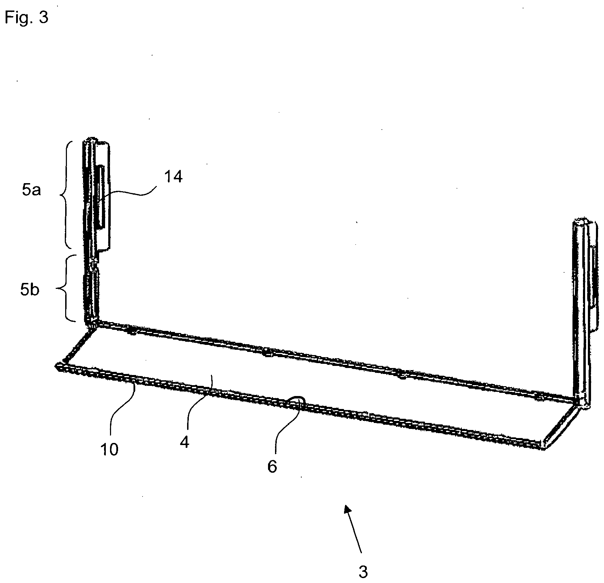

As shown in **Fig. 3**, the assembled label holder 3 can be then pivoted about a swivel axis, which is defined by said swivel-joints11.

For holding said holding profile 4 in a detachable position inside casing 2, latching elements are provided, wherein said holding profile 4 has one fixing element 12a on each narrow side and said second mounting section 5b comprises complementary fixing brackets 11a. Fixing elements 12a and fixing brackets 11a are designed to ensure a secure holding of the profile 4.

In order to swivel the holding profile easily, an indentation 6 is located at one the long sides of said holding profile 4 opposite to the swivel axis defined by said swivel-joints 11.

For inserting or removing any labels into said label holding profile 4, the label holding profile 4 comprises several insertions 10 or guidance elements, which form a rail. **Fig.** 1, 2 and 3 show eight such guidance elements 10, four on each long side of said label holding profile 4.

The label holding profile 4 is made out of a transparent material, such as acrylic glass.

A distribution box 1 has a cover 2 and a base plate (not shown figuratively) on which all electric or electronic components are attached, for example the switching devices and the corresponding mounting rails and electric bus bars and terminal blocks. The casing 2 is attached to the base plate in order to safeguard said electronic components.

In the embodiment shown in **Fig 4**, there are two rows of switching devices, accordingly there are two rectangular openings 13, 13' in the cover, each for giving access to one of the rows of operating elements of the switching devices. Both rows are arranged above each other. There is an upper row for the upper opening 13' and a lower row for the lower opening 13.

As shown in **Fig. 4** and **5**, two the label holders 3, 3' are mounted at the cover 2 of the distribution box 1. The upper label holder 3' is associated with the upper opening 13', and the lower label holder 3 is associated with the lower opening 13.

The cover 2 has two rectangular openings 13, 13' for giving way to both rows of switch gears (not shown figuratively) inside the casing 2. In each opening 13, 13' one label holder 3, 3' is arranged. The openings 13, 13' comprise holding sections 7 located on each of their narrowed sides and comprise an elongated bar 9 which is clasped by the long hole 14 of the fin 8 at the first mounting section 5a of the holder support 5.

### REFERENCE NUMERALS

- 1: Distribution box
- 2: Cover
- 3, 3': Label holder
- 4: Label holding profile
- 5: Holder supports
- 5a: First mounting section
- 5b: Second mounting section
- 6: Indentation
- 7: Holding section
- 8: Fin
- 9: Elongated bar
- 10: Insertion
- 11: Swivel-joint bearing
- 11a: Fixing element
- 12: Swivel-joint bar
- 12a: Fixing bracket
- 13, 13': Openings
- 14: Long hole

## Claims

1. Label holder (3) for a distribution box (1), said label holder (3) having a rectangular shaped label holding profile (4), wherein said label holder (3) comprises at least two lengthwise extending holder supports (5), wherein the holding profile (4) is formed as a hinged cover which is removably mounted between said at least two holder supports (5), whereby a swivel axis of the holding profile (4) is extending parallel to a long side of said holding profile (4), **wherein** each holder support (5) has at least a first mounting section (5a) designed for mounting the label holder (3) into a distribution box (1) and at least a second mounting section (5b) designed for mounting the holding profile(4) to said holder support (5). wherein the first mounting section (5a) has first fixing means which are designed to cooperate with corresponding second fixing means in the distribution box (1), **characterized in that** said first fixing means is a fin (8) protruding from the holder support (5) opposite to a narrow side of the holding profile (4), wherein said fin (8) is designed to engage with the corresponding second fixing means in the distribution box (1).

2. Label holder (3) according to claim 1, **wherein** the holding profile (4) is removably mounted between the at least two holder supports (5) with its narrow sides oriented in parallel to a direction of lengthwise extension of each of the at least two holder supports (5).

3. Label holder (3) according to claim 1, **wherein** each fin (8) has a long hole (14) which is designed to engage with the corresponding second fixing means in the distribution box (1).

4. Label holder (3) according to one of claims 1 to 3, **wherein** said holding profile (4) has at least one indentation (6) located at one of its long sides adversely located to said swivel axis.

5. Label holder (3) according to at least one of the claims 1 to 3, **wherein** said holding profile (4) is formed as a transparent cover which has at least one insertion (10) for removably holding a label behind the transparent cover, wherein said insertion (10) is arranged alongside at least one of the long sides of the holding profile(4).

6. Cover (2) for a distribution box (1), which has at least one rectangular opening for giving access to the front side of switch gears mounted to the distribution box, with at least one label holder (3), **wherein** said label holder (3) is a label holder (3) according to one of claims 6 to 8.

7. Cover (2) with label holder (3) according to claim 6, **wherein** the first mounting sections (5a) of said holder supports (5) are mounted into corresponding holding sections (7) at the narrow sides of the rectangular opening in the cover (2).

8. Cover (2) with label holder (3) according to claim 7, **wherein** said second fixing means are formed at said holding sections (7)

9. Cover (2) with label holder (3) according to claim 8, **wherein** said second fixing means comprise at least one elongated bar (9) extending into the rectangular opening and designed to engage with the long hole (14) in the fin (8) of the first mounting section (5a).

10. Distribution box (1) with a cover (2), according to one of claims 6 to 9.

## Patentansprüche

1. Etikettenhalter (3) für einen Verteilerkasten (1), wobei der Etikettenhalter (3) ein rechteckig geformtes Etikettenhalteprofil (4) aufweist, wobei der Etikettenhalter (3) wenigstens zwei sich längs erstreckende Halterstützen (5) umfasst, wobei das Halteprofil (4) als Verschlussklappe ausgebildet ist, die auf abnehmbare Weise zwischen den wenigstens zwei Halterstützen (5) befestigt ist, wobei sich eine Schwenkachse des Halteprofils (4) parallel zu einer Längsseite des Halteprofils (4) erstreckt, **wobei** jede Halterstütze (5) wenigstens einen ersten Befestigungsabschnitt (5a), der zum Befestigen des Etikettenhalters (3) in einem Verteilerkasten (1) ausgelegt ist, und wenigstens einen zweiten Befestigungsabschnitt (5b), der zum Befestigen des Halteprofils (4) an der Halterstütze (5) ausgelegt ist, aufweist, wobei der erste Befestigungsabschnitt (5a) erste Befestigungsmittel aufweist, die dazu ausgelegt sind, mit entsprechenden zweiten Befestigungsmitteln in dem Verteilerkasten (1) zusammenzuwirken, **dadurch gekennzeichnet, dass** das erste Befestigungsmittel eine Rippe (8) ist, die gegenüber einer Schmalseite des Halteprofils (4) von der Halterstütze (5) vorsteht, wobei die Rippe (8) dazu ausgelegt ist, mit den entsprechenden zweiten Befestigungsmitteln in dem Verteilerkasten (1) einzugreifen.

2. Etikettenhalter (3) nach Anspruch 1, **wobei** das Halteprofil (4) auf abnehmbare Weise zwischen den wenigstens zwei Halterstützen (5) befestigt ist, wobei seine Längsseiten parallel zu einer Richtung der Längserstreckung jeder der wenigstens zwei Halterstützen (5) ausgerichtet sind.

3. Etikettenhalter (3) nach Anspruch 1, **wobei** jede Rippe (8) ein Langloch (14) aufweist, das dazu ausgelegt ist, mit den entsprechenden zweiten Befestigungsmitteln in dem Verteilerkasten (1) einzugreifen.

4. Etikettenhalter (3) nach einem der Ansprüche 1 bis 3, **wobei** das Halteprofil (4) wenigstens eine Vertiefung (6) aufweist, die sich auf einer seiner Längsseiten befindet und gegenüber der Schwenkachse festgelegt ist.

5. Etikettenhalter (3) nach wenigstens einem der Ansprüche 1 bis 3, **wobei** das Halteprofil (4) als transparente Abdeckung ausgebildet ist, die wenigstens einen Einsatz (10) aufweist, um ein Etikett auf abnehmbare Weise hinter der transparenten Abdeckung zu halten, wobei der Einsatz (10) entlang wenigstens einer der Längsseiten des Halteprofils (4) angeordnet ist.

6. Abdeckung (2) für einen Verteilerkasten (1), der wenigstens eine rechteckige Öffnung aufweist, um einen Zugang zu der Vorderseite von in dem Verteilerkasten montierten Schaltanlagen zu gewähren, mit wenigstens einem Etikettenhalter (3), **wobei** der Etikettenhalter (3) ein Etikettenhalter (3) nach einem der Ansprüche 6 bis 8 ist.

7. Abdeckung (2) mit einem Etikettenhalter (3) nach Anspruch 6, **wobei** die ersten Befestigungsabschnitte (5a) der Halterstützen (5) in entsprechenden Halteabschnitten (7) auf Schmalseiten der rechteckigen Öffnung in der Abdeckung (2) befestigt sind.

8. Abdeckung (2) mit einem Etikettenhalter (3) nach Anspruch 7, **wobei** die zweiten Befestigungsmittel an den Halteabschnitten (7) ausgebildet sind.

9. Abdeckung (2) mit einem Etikettenhalter (3) nach Anspruch 8, **wobei** die zweiten Befestigungsmittel wenigstens eine längserstreckte Leiste (9) umfassen, die sich in die rechteckige Öffnung erstreckt und dazu ausgelegt ist, mit dem Langloch (14) in der Rippe (8) des ersten Befestigungsabschnitts (5a) einzugreifen.

10. Verteilerkasten (1) mit einer Abdeckung (2) nach einem der Ansprüche 6 bis 9.

## Revendications

1. Porte-étiquette (3) pour une boîte de distribution (1), ledit porte-étiquette (3) comportant un profil de retenue d'étiquette de forme rectangulaire (4), ledit porte-étiquette (3) comprenant au moins deux supports de monture s'étendant en longueur (5), dans lequel le profil de retenue (4) est formé en tant que couvercle articulé qui est monté amovible entre lesdits au moins deux supports de monture (5), moyennant quoi un axe de pivotement du profil de retenue (4) s'étend parallèlement à un côté long dudit profil de retenue (4), dans lequel chaque support de monture (5) comporte au moins une première section de montage (5a) conçue pour monter le porte-étiquette (3) dans une boîte de distribution (1) et au moins une seconde section de montage (5b) conçue pour monter le profil de retenue (4) sur ledit support de monture (5), dans lequel la première section de montage (5a) comporte un premier moyen de fixation qui est conçu pour coopérer avec un second moyen de fixation correspondant dans la boîte de distribution (1), **caractérisé en ce que** ledit moyen de fixation est un ergot(8) faisant saillie depuis le support de monture (5) à l'opposé d'un côté étroit du profil de retenue (4), dans lequel ledit ergot (8) est conçu pour venir en prise avec le second moyen de fixation correspondant dans la boîte de distribution (1).

2. Porte-étiquette (3) selon la revendication 1, dans lequel le profil de retenue (4) est monté amovible entre les au moins deux supports de monture (5) avec ses côtés étroits orientés parallèlement à une direction d'extension en longueur de chacun des au moins deux supports de monture (5).

3. Porte-étiquette (3) selon la revendication 1, dans lequel chaque ergot (8) comprend un trou long (14) qui est conçu pour venir en prise avec le second moyen de fixation correspondant dans la boîte de distribution (1).

4. Porte-étiquette (3) selon l'une quelconque des revendications 1 à 3, dans lequel ledit profil de retenue (4) comporte au moins une indentation (6) située sur l'un de ses côtés longs à l'opposé dudit axe pivotant.

5. Porte-étiquette (3) selon au moins l'une des revendications 1 à 3, dans lequel ledit profil de retenue (4) est formé en tant que couvercle transparent qui comprend au moins une insertion (10) destinée à retenir de façon amovible une étiquette derrière le couvercle transparent, dans lequel ladite insertion (10) est disposée le long d'au moins l'un des côtés longs du profil de retenue (4).

6. Couvercle (2) pour une boîte de distribution (1), qui comporte au moins une ouverture rectangulaire permettant d'accéder au côté avant de dispositifs de commutation montés sur la boîte de distribution, comportant au moins un porte-étiquette (3), dans lequel ledit porte-étiquette (3) est un porte-étiquette (3) selon l'une quelconque des revendications 6 à 8.

7. Couvercle (2) avec porte-étiquette (3) selon la revendication 6, dans lequel les premières sections de montage (5a) desdits supports de monture (5) sont montées dans des sections de retenue correspondantes (7) sur les côtés étroits de l'ouverture rectangulaire dans le couvercle (2).

8. Couvercle (2) avec porte-étiquette (3) selon la revendication 7, dans lequel ledit second moyen de fixation est formé sur lesdites sections de retenue (7).

9. Couvercle (2) avec porte-étiquette (3) selon la revendication 8, dans lequel ledit second moyen de fixation comprend au moins une barre allongée (9) s'étendant dans l'ouverture rectangulaire et conçue pour venir en prise avec le trou long (14) dans l'ergot (8) de la première section de montage (5a).

10. Boîte de distribution (1) comportant un couvercle (2) selon l'une quelconque des revendications 6 à 9.
